# EUROPÄISCHE PATENTSCHRIFT

(11) **EP 3 281 894 B1**
(45) Veröffentlichungstag und Bekanntmachung des Hinweises auf die Patenterteilung: **17.02.2021**
(21) Anmeldenummer: 17001309.8
(22) Anmeldetag: 31.07.2017
(51) Int. Cl.: B65G 47/91

(54) **VORRICHTUNG FÜR DIE AUFNAHME, DEN TRANSFER UND DIE ABLAGE VON PRODUKTEN MIT VERÄNDERUNG IHRER GEOMETRISCHEN ANORDNUNG**
DEVICE FOR RECEPTION, TRANSFER AND THE DEPOSIT OF PRODUCTS WITH MODIFICATION OF THEIR GEOMETRIC ARRANGEMENT
DISPOSITIF DE RÉCEPTION, DE TRANSFERT ET DE DÉPÔT DE PRODUITS AVEC MODIFICATION DE LEUR AGENCEMENT GÉOMÉTRIQUE

(30) Priorität: 09.08.2016 IT 201600083716
(43) Veröffentlichungstag der Anmeldung: 14.02.2018
(73) Patentinhaber: Zucal, Sergio, 38010 Romeno (TN) (IT)
(72) Erfinder: Zucal, Sergio, 38010 Romeno (TN) (IT)
(74) Vertreter: Oberosler, Ludwig

(56) Entgegenhaltungen:
- JP-A- S5 717 708
- JP-A- H04 352 618
- JP-A- H06 271 063
- JP-A- H07 125 713
- JP-A- S58 149 216

## Beschreibung

Die Erfindung bezieht sich auf eine Vorrichtung für die Aufnahme von Produkten, z.B. Äpfel, von einem Transportband oder von einer Bearbeitungs- oder Verpackungsunterlage, z.B. von einem Plateau mit Aufnahmemulden oder Aufnahmezellen welche wesentlich in einer einzigen Ebene, gemäß der vom Transportband oder von der Bearbeitungs- oder Verpackungsunterlage vorgegebenen Geometrie, angeordnet sind, um diese Produkte zu transportieren und, nach eventueller Veränderung ihrer geometrischen Anordnung, auf einer Transport- oder Verpackungsunterlage abzulegen.

Es sind roboterartige mechanische Greifarme für die Aufnahme einzelner Produktstücke von einem Transportband und deren geordnete Ablage in Mulden oder Zellen von Transport- oder Verpackungsunterlagen, bekannt; diese Greifarme sind so konzipiert, dass sie auch, während des Transfers, die einzelnen aufgenommenen Produktstücke drehen können um sie, z.B. mit den Etiketten oder dem Stängel gleich ausgerichtet, abzulegen. Zwecks Beschleunigung dieser Arbeitsgänge ist es bekannt mehrere Roboter-Greifarme einzusetzen welche am selben Transportband arbeiten; auch in diesem Fall sind jedoch nicht annehmbar kurze Arbeitszeiten erreichbar, um die vom Transportband angelieferte Menge der Produktstücke bearbeiten zu können. Weiters benötigen die mehrfachen Roboter-Greifarme, im Fall der Veränderung der geometrischen Anordnung der Produktstücke bei der Aufnahme und/oder bei der Ablage, aufwändige Einstellarbeiten und häufige Wartungsarbeiten.

Aus der JP H07 125713 A, entsprechend dem Oberbegriff des Anspruchs 1, und aus der JP H04 352618 A sind Vorrichtungen für die Veränderung der Achsabstände zwischen den von dieser aufgenommenen Produktstücken bekannt welche anschließend mit anderen Achsabständen in Behälter oder auf Transportunterlagen abgelegt werden. Dadurch dass alle Aufnahmeelemente dieser Vorrichtungen durch pantographartig angeordnete Hebel verbunden sind ist es zwar möglich die Reihen der Produktstücke in zueinander versetzter Position anzuordnen aber dadurch, dass die Führungsstäbe welche mit den Aufnahmeelementen verbunden sind nur in eine Richtung verstellbar sind (JP H 04 352618 A), ist der besagte Versatz zwischen den Aufnahmeelementen benachbarter Führungsstäbe nur in eine Richtung möglich. Die Verpackungs- oder Transportunterlagen mit versetzt angeordneten Mulden müssen aus diesem Grund so bereitgestellt werden, dass sie dem Versatz unter den Reihen der Produktstücke entsprechen welcher durch die Vorrichtung verwirklicht werden kann. Weiters erlauben diese Vorrichtungen nicht die Anordnung der Reihen von Produktstücken oder deren unterschiedliche Reihenabstände in einer Weise, wie sie z.B. für Verpackungen von abwechselnden Reihen von Äpfeln und Birnen (unterschiedliche Reihenbreite) erforderlich wäre.

Aus den JP H06 271063 A, JP S58 149216A und JP S57 17708 A sind Vorrichtungen für die Aufnahme, den Transfer und die Ablage von Produktstücken bekannt welche den Achsabstand zwischen den Produktstücken gleichmäßig verändern können. Dadurch dass sämtliche Führungsstangen der einzelnen Aufnahmeelemente durch pantographartig angeordnete Hebel verbunden sind, ist es nicht möglich die Produktstücke in zueinander versetzten Reihen anzuordnen oder aufzunehmen oder den Abstand zwischen den Reihen, voneinander unabhängig zu verändern.

Die Erfindung stellt sich die Aufgabe eine Vorrichtung zur Aufnahme, den Transfer und die Ablage von Produktstücken mit hoher Leistung zu schaffen, welche geeignet ist sich der geometrische Anordnung bei der Aufnahme und/oder der Ablage derart anzupassen, dass sie an nebeneinander angeordneten Bearbeitungs- oder Verpackungsunterlagen arbeiten kann, welche eventuell eine unterschiedliche Anzahl und Anordnung von Aufnahmemulden aufweisen, z.B. mit zueinander, in beiden Richtungen, versetzt angeordneten Muldenreihen oder mit unterschiedlichen Abständen zwischen den Muldenreihen, bzw. mit unterschiedlichen Abständen zwischen den Mulden der einzelnen Muldenreihen.

Zur Lösung dieser Aufgabe schlägt die Erfindung eine Vorrichtung mit den Merkmalen des Anspruchs 1 vor, welche mit einer Anzahl bekannter Aufnahmeelemente ausgestattet ist, welche mindestens der Anzahl der Aufnahmemulden einer großen oder zweier nebeneinander angeordneter kleinerer Verpackungs- oder Transportunterlage oder nebeneinander angeordneter Schachteln, entspricht, wobei die Vorrichtung gemäß drei Achsen beweglich ist und auf bekannten, mit Motor versehenen Führungsschienen oder auf einem Roboterarm montiert ist.

Die erfindungsgemäße Vorrichtung besteht wesentlich aus einem, z.B. quadratischen oder rechteckigen, Außenrahmen an welchem, zueinander parallele Führungsstäbe, an Führungen welche an den zwei gegenüberliegenden Innenseiten des Rahmens vorgesehen sind, verschiebbar gelagert sind; an jedem der Führungsstäbe sind mehrere bekannte Aufnahmeelemente, z.B. mit Saugnapf oder mit Greifzange, längsverschiebbar gelagert. Diese verschiebbaren Führungsstäbe sind an ihren Enden vorzugsweise in Gruppen von mindestens zwei Führungsstangen über pantographartig angeordnete Hebel verbunden so dass der Abstand zwischen den einzelnen Führungsstäben, während des Auseinanderziehens oder Zusammenschiebens durch, an beiden Führungsstangen, bei nur zwei Stangen, bzw. an beiden äußersten Führungsstangen, bei einer Gruppe von Stangen, angebrachte Elektromotoren, gleich bleibt; dabei wirken die Motoren mittels Zahnräder auf Zahnstangen welche an den, sich gegenüberliegenden Innenseiten des Rahmens, befestigt sind. Die Erfindung schließt jedoch nicht aus, dass die besagten Führungsstangen einzeln oder in Gruppen mittels Gewindestangen, Kabelzug, Hydraulik- oder Pneumatikzylinder, spezifischer Motoren, z.B. Linearmotoren, bewegt werden.

Erfindungsgemäß können alle Aufnahmeelemente welche an der selben Führungsstange gelagert sind unter sich vorteilhafterweise über pantographartig angeordnete Hebel verbunden sein, wobei erreicht wird dass diese, während des Zusammenschiebens oder Auseinanderziehens, durch Betätigung der äußersten Aufnahmeelemente einer Reihe von unter sich verbundener Aufnahmeelemente, die Achsabstände immer in gleichem Maß verändern. Erfindungsgemäß erfolgt das Auseinanderziehen und Zusammenschieben mittels Querstangen welche quer zu den unter sich parallelen Führungsstangen mit den Aufnahmeelementen angeordnet sind und welche mit den äußersten Aufnahmeelementen, jeder der an der selben Führungsstange gelagerten Reihe von Aufnahmeelementen, verbunden sind. Die Querstangen sind mit Motor und Zahnräder versehen welche in zwei parallele Zahnstangen eingreifen welche an der Innenseite der anderen zwei, den Rahmen der Vorrichtung bildenden, Seitenelemente vorgesehen sind. Die Erfindung schließt jedoch nicht aus, dass der Antrieb der besagten Querstangen über Pneumatik- oder Hydraulikzylinder, über motorbetriebene Gewindestangen oder Kabelzüge erfolgt. Um die Aufnahme und die Ablage der Produkte von, bzw. in, zueinander versetzte Mulden, zu erreichen, werden die, z.B. mit Saugnapf versehenen, Aufnahmeelemente, der in ungerader Position angeordneten Führungsstangen, von Querstangen betätigt welche, z.B. oberhalb der Führungsstangen, wirken, während die Aufnahmeelemente der in gerader Position angeordneten Führungsstangen von Querstangen betätigt werden welche unterhalb der Führungsstangen wirken. Weiters schließt die Erfindung nicht aus, dass das Verschieben der einzelnen Aufnahmeelemente dadurch erreicht wird, dass jedes einzelne dieser mit einem Linearmotor oder mit einem Motor ausgestattet wird welcher, z.B. mittels einem Zahnrad, auf eine an der Führungsstange vorgesehenen Zahnstange wirkt, mittels einer Gewindemutter auf eine Gewindestange oder mittels einer Kabelrolle auf einen gespannten Kabel wirkt, natürlich kann die selbe Verschiebung mittels Hydraulik- oder Pneumatikzylinder erfolgen welche zwischen den einzelnen Aufnahmeelemente und der Führungsstange wirken.

Erfindungsgemäß können die einzelnen, z.B. mit Saugnapf versehenen, Aufnahmeelemente mit einem Motor, welcher geeignet ist den Saugnapf zu neigen und/oder zu drehen und mit einer pneumatischen Kupplung versehen sein welche den Luftdurchfluss, auch während der Bewegungen des Saugnapfes, ermöglicht.

Alle Bewegungen der einzelnen Aufnahmeelemente und ihre Positionierung werden gesteuert:
- durch Erhebungssonden welche geeignet sind die Geometrie der Anordnung der Produkte auf dem Transportband oder auf den Beschickungsunterlagen, von welchen die Produktstücke aufzunehmen sind, zu erkennen oder durch eine programmierbare Software welche die Positionierungsgeometrie bei der Aufnahme und bei der Ablage bestimmt,
- durch Erhebungssonden welche geeignet sind die Geometrie der Anordnung der Aufnahmemulden an den Bearbeitungs- oder Verpackungsunterlagen zu erkennen in welche die Produkte abgelegt werden müssen oder durch eine programmierbare Software welche die Geometrie der Anordnung bei der Aufnahme und bei der Ablage der Produkte bestimmt,
- durch Erhebungssonden welche die Aufnahmeposition und die Ablageposition erkennen um den Mechanismus oder die motorisierten Führungen für die Bewegung gemäß drei Achsen oder den Robotergreifarm für die Bewegungen zwischen der Aufnahme- und der Ablageposition und die entsprechende präzise Positionierung zu steuern,
- durch eventuelle Farberkennungssensoren welche Markierungen und/oder optische Kennzeichen erkennen, wie z.B. die Leseposition von Etiketten, die Position des Stängels, um durch Drehung der Saugnäpfe oder anderer Aufnahmeorgane die Positionierung dieser, in den Aufnahmemulden oder Aufnahmezellen der Verpackungsunterlagen oder in Verpackungskartons zu bestimmen.

Der Arbeitsablauf der erfindungsgemäßen Vorrichtung erfolgt gemäß folgender Phasen:
- Heranführen der Vorrichtung mit den Aufnahmeelementen in Position oberhalb der Transport- oder Verpackungsunterlagen, Erkennen der Anordnung der Unterlage, oder Unterlagen, und Erkennen der Anordnung der entsprechenden Ablagemulden in welche die einzelnen Produktstücke abzulegen sind, wobei der eventuelle gegenseitige Versatz der Reihen dieser Mulden und der eventuelle größere Abstand zwischen zwei anliegenden zu befüllenden Unterlagen, sowie auch der eventuell unterschiedliche Muldenabstand in den einzelnen Muldenreihen, berücksichtigt werden,
- Verfahren der Vorrichtung in Position oberhalb des Transportbandes, bzw. oberhalb der Transport- oder Bearbeitungsunterlagen mit den aufzunehmenden Produktstücken,
- Erkennen der Anordnungsgeometrie der Produktstücke und entsprechende Positionierung der Aufnahmeelemente,
- eventuelles Erkennen der Markierungen (Etikette, Farbe, Stängel, usw.) welche die gewünschte Ausrichtung der Produktstücke in den Mulden der Unterlage bestimmen,
- Absenken der Saugnäpfe, Ansaugen, Anheben der Saugnäpfe während die einzelnen Produktstücke festgesaugt bleiben,
- Verfahren der Vorrichtung in die vorher eingelesene Position oberhalb der Transport- oder Verpackungsunterlage/-unterlagen, wobei die Aufnahmeelemente so verstellt werden, dass ihre Anordnung der vorher eingelesenen Geometrie der Anordnung der Mulden an der Unterlage entspricht; eventuelle gleichzeitige Drehung der Saugnäpfe und somit der einzelnen Produktstücke um die vorher eingelesenen Markierungen in die gewünschte einheitliche Position auszurichten,
- Absenken der Saugnäpfe in, den Mulden für die Ablage der Produktstücke entsprechender Position, Unterbrechung der Saugwirkung an den Saugnäpfen, bzw. Betätigen der mechanischen oder magnetischen Halteorgane, zwecks Ablage der einzelnen Produktstücke,
- Wiederholung des Arbeitszyklus mit eventueller Erhebung an den nächsten zu befüllenden Unterlagen, nur wenn diese eine andere Geometrie und/oder eine andere Anordnung der Mulden als jene der vorher eingelesenen und soeben befüllten Unterlagen aufweisen.

Durch Vorsehen, an der erfindungsgemäßen Vorrichtung, einer relativ hohen Anzahl von Aufnahmeelementen, z.B. mit Saugnäpfen, ist es möglich, durch eine einzige Vorrichtung alle Produktstücke zu bearbeiten welche auf der gesamten Breite des Transportbandes oder einer anderen Zuführvorrichtung vorgesehen sind und auf einer Zeilenanzahl angeordnet sind welche gleich oder auch größer als die Zeilenanzahl in Querrichtung an der, zu befüllenden größten, im Normalfall benützten, Unterlage ist. Dadurch ist es möglich die mechanisierte Ablage der Produktstücke in den Transport- oder Verpackungsunterlagen, unter Berücksichtigung der Zuführgeschwindigkeit des Transportbandes oder einer anderen Beschickungsvorrichtung durchzuführen, ohne dass eine Verlangsamung in der Bearbeitungsfolge stattfindet.

Die Erfindung wird anschließend anhand eines in den Zeichnungen schematisch dargestellten Ausführungsbeispieles einer erfindungsgemäßen Vorrichtung für die Aufnahme, den Transfer und die Ablage von Produkten näher erklärt, dabei erfüllen die Zeichnungen rein erklärenden, nicht begrenzenden Zweck.

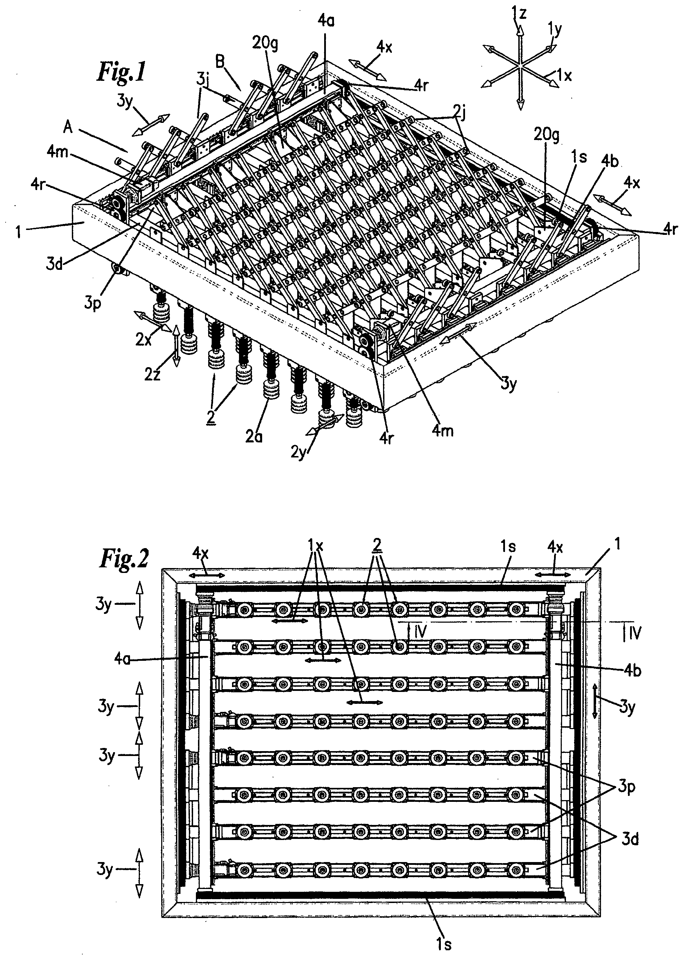

Die Fig. 1 zeigt eine perspektivische Darstellung einer erfindungsgemäßen Vorrichtung, ohne Einrichtung oder Roboterarm für deren Bewegung, mit den Saugnäpfen der einzelnen Aufnahmeelemente in der ersten und in der letzten Querreihe in angehobener Position, währen alle anderen in abgesenkter Position und gleichmäßig auf der Fläche, innerhalb des Rahmens der Vorrichtung, verteilt angeordnet sind; es sind zwei Gruppen von Führungsstangen für die Aufnahmeelemente vorgesehen welche separat steuerbar sind, sollte wegen der anliegenden Ränder zweier nebeneinander angeordneter Unterlagen mit zu befüllenden Mulden, ein größerer Abstand zwischen den Aufnahmeelementen notwendig sein.

Die Fig. 2 zeigt die Draufsicht der in Fig. 1 dargestellten Vorrichtung.

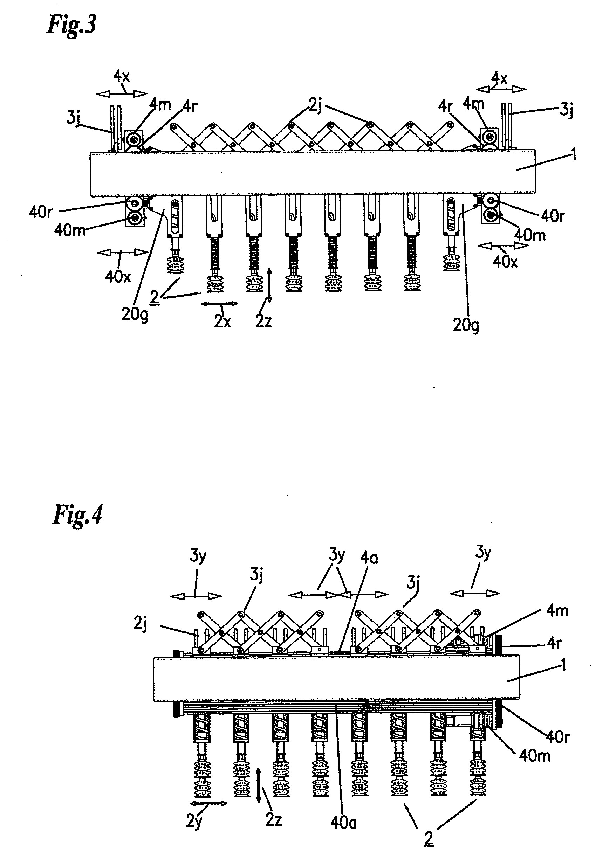

Die Fig. 3 zeigt die Seitenansicht von links der in Fig. 1 dargestellten Vorrichtung.

Die Fig. 4 zeigt die Vorderansicht der in Fig. 1 dargestellten Vorrichtung.

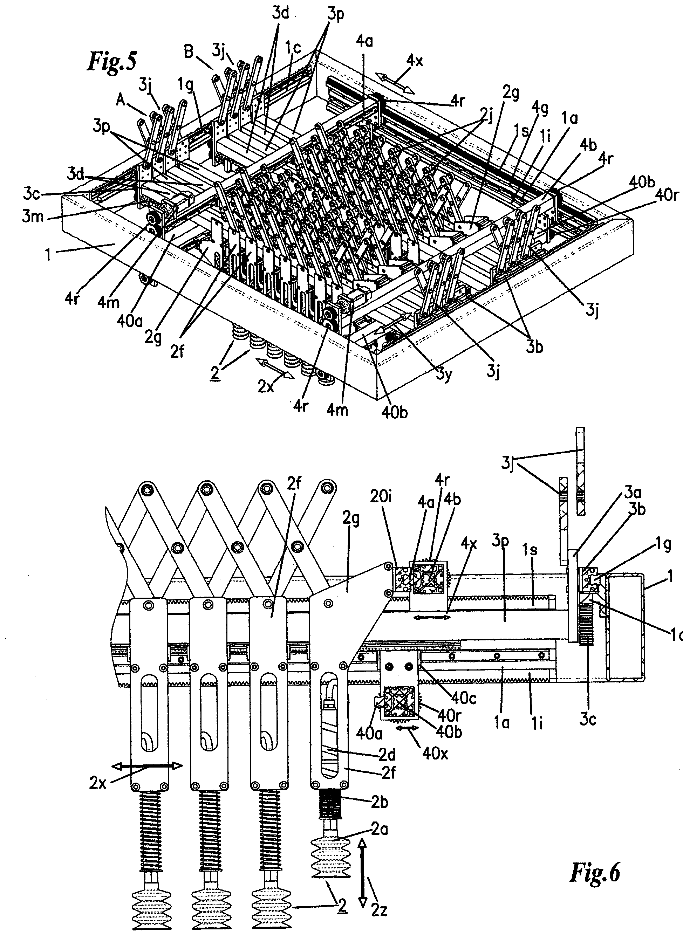

Die Fig. 5 zeigt die perspektivische Darstellung der in Fig. 1 dargestellten Vorrichtung mit den Aufnahmeelementen samt Saugnapf in angenäherter Position und mit den beiden Gruppen von Führungsstangen für die Aufnahmeelemente, welche unter sich merklich mehr als die vier gruppierten Führungsstangen beabstandet sind.

Die Fig. 6 zeigt eine Schnittdarstellung gemäß der in Fig. 2 gezeigten Schnittebene.

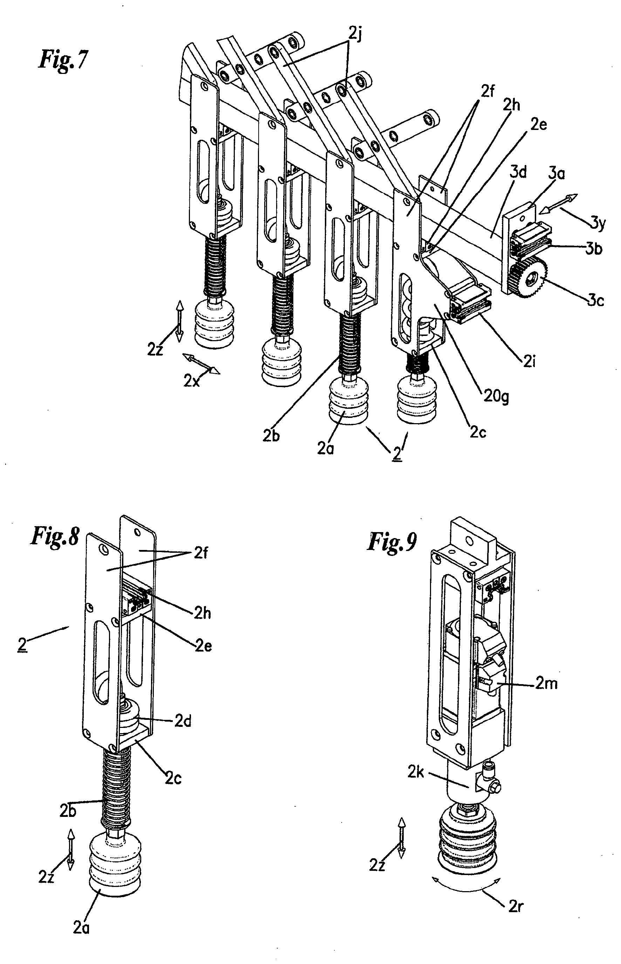

Die Fig. 7 zeigt in perspektivischer Darstellung den rechten Teil einer Führungsstange mit einigen Aufnahmeelementen mit Saugnapf welche oben mittels pantographartig angeordneter Hebeln verbunden sind, wobei das erste rechte Aufnahmeelement geeignet ist um gleitend mit der entsprechenden unteren Querstange, unabhängig von der in den Fig. 5, 6 sichtbaren oberen Querstange, verbunden zu werden.

Die Fig. 8 zeigt in perspektivischer Darstellung ein Aufnahmeelement mit einfachem Saugnapf.

Die Fig. 9 zeigt in perspektivischer Darstellung ein Aufnahmeelement mit Saugnapf mit Motor für die Drehung des Saugnapfes und mit einer Kupplung welche die Drehung des Saugnapfes während der Saugwirkung ermöglicht.

Die erfindungsgemäße Vorrichtung besteht aus einem starren, quadratischen oder rechteckigen Rahmen 1 welcher auf bekannte, nicht dargestellte, motorisierte Führungsschienen gemäß drei Achsen bewegbar oder auf einem Roboterarm aufgebaut ist um die Bewegungen 1x, 1y und die vertikale Bewegung 1z ausführen zu können, wobei der besagte Rahmen 1 vorzugsweise horizontal gehalten wird. An den nach innen gekehrten Seiten des besagten Rahmens 1 sind, an zwei sich gegenüberliegenden Innenseiten, in Querrichtung, Zahnstangen 1c und Führungen 1g und, in Längsrichtung, Zahnstangen 1s und Führungen 1a vorgesehen. Längs der besagten Querführungen 1g laufen 3y mehrere, in Längsrichtung angeordnete, Führungsstangen 3d, 3p welche an beiden Enden stirnseitig mit vertikalen Laschen 3a versehen sind, welche Gleitelemente 3b tragen. Die besagten vertikalen Laschen 3a der einzelnen Führungsstangen 3d, 3p sind unter sich mittels pantographartig angeordneter Hebel verkettet, wobei zwei Gruppen A und B von, unter sich mechanisch unabhängigen, Führungsstangen 3d, 3p gebildet werden

An jeder der Führungsstangen 3d, 3p sind mehrere Aufnahmeelemente mit Saugnapf 2 gleitend 2x gelagert welche ein Gleitelement 2h aufweisen welches zwischen zwei Seitenteilen 2f getragen wird, welche am unteren Ende durch eine Querplatte 2c verbunden sind an welcher vertikal gleitend 2z, mit Zwischenlage einer Druckfeder 2b, der hohle Schaft des Saugnapfs 2a gelagert ist welcher mittels einem biegsamen Schlauch 2d an eine, nicht dargestellte, pneumatische Saugeinrichtung angeschlossen ist. Die Gleitelemente 2h der einzelnen Aufnahmeelemente 2 gleiten an einer Führung welche unterhalb jeder der Führungsstangen 3d, 3p angebracht sind. An beiden Enden der äußeren Führungsstangen 3d, 3p welche seitlich jeder der Führungsstangengruppen A und B angeordnet sind, ist ein Zahnrad 3c vorgesehen welches an der, am Rahmen 1 angebrachten, Zahnstange 1c eingreift. Die besagten beiden Zahnräder 3c der Führungsstangen 3d, 3p sind unter sich über eine Welle im Inneren der Führungsstange verbunden und mittels Motor 3m angetrieben welcher auf eines der Zahnräder 3c oder auf die Verbindungswelle wirkt. Die Pantographe 3j welche an den beiden Enden die Führungsstangen 3d, 3p der beiden Gruppen A und B verketten, sichern dass zwischen den einzelnen Führungsstangen 3d, 3p, während des Verschiebens einer oder beider der seitlichen Führungsstangen 3d, 3p der selben Gruppe A oder B die Abstände zwischen den Führungsstangen gleich bleiben. Auf diese Weise ist es möglich, dass die Führungsstangen 3d, 3p einer Gruppe A von jenen der Gruppe B um ein Maß beabstandet werden welches jener Breite entspricht welche, z.B. von den nebeneinander liegenden Rändern zweier Unterlagen mit zu befüllenden Mulden, eingenommen wird.

Um das Versetzen zwischen den auf einer Führungsstange 3d gleitenden Aufnahmeelementen mit Saugnapf 2, welche sich z.B. in einer ungeraden Position befindet, gegenüber der Aufnahmeelemente 2 welche sich längs einer benachbarten Führungsstange 3p bewegen und somit sich in einer geraden Position befinden, zu erhalten, schlägt die Erfindung den Einsatz zweier Querstangen 4a, 4b vor welche über den Gruppen A und B der Längsführungsstangen 3d, 3p verschiebbar 4x sind und zweier Querstangen 40a, 40b welche unterhalb der selben Gruppen A und B der Längsführungsstangen 3d, 3p verschiebbar 40x sind. Die oberen Querstangen 4a, 4b sind an ihren Enden mit Zahnrädern 4r versehen welche vom Motor 4m angetrieben werden und welche in die, am Rahmen 1 montierten, Zahnstangen 1s eingreifen. Die unteren Querstangen 40a, 40b sind an ihren Enden mit Zahnrädern 40r, welche vom Motor 40m angetrieben werden und welche in die Zahnstangen 1i eingreifen und mit Gleitelementen 40c versehen welche längs der, am Rahmen 1 befestigten, Führungen 1a gleiten. Mit den oberen Querstangen 4a, 4b sind, mittels abstehender Flanschen 2g, die entsprechenden, sich in Endposition der Reihe von Abstandselementen 2 befindenden, Aufnahmeelemente 2 verbunden welche sich auf den Führungsstangen 3d in ungerader Position bewegen. Mit den unteren Querstangen hingegen sind, mittels abstehender Flanschen 20g, die entsprechenden Aufnahmeelemente 2 verbunden welche sich auf den Führungsstangen 3p in gerader Position bewegen. Nachdem alle Aufnahmeelemente mit Saugnapf 2 welche sich auf der selben Führungsstange 3d, 3p bewegen unter sich, über pantographartig angeordnete Hebel 2j, verkettet sind, wird erreicht dass, durch Vergrößern oder Verkleinern 4x des Abstandes zwischen den oberen Querstangen 4a, 4b, der Achsabstand zwischen den einzelnen Aufnahmeelementen 2 an den Führungsstangen 3d in ungerader Position vergrößert oder verkleinert wird, dabei sichern die Pantographe 3j den identischen Achsabstand zwischen allen, an den Führungsstangen 2d in ungerader Position, gelagerten Aufnahmeelementen. Das selbe trifft zu, wenn die unteren Querstangen 40a, 40b für die Aufnahmeelemente mit Saugnapf 2, an den Führungsstangen 3p in gerader Position, bewegt 40x werden. Durch Verschieben der besagten Aufnahmeelemente 2 an den besagten Führungsstangen 3p in gerader Position, im Verhältnis zu den Aufnahmeelementen 2 an den Führungsstangen 3d in ungerader Position, um ein Maß gleich dem gegenseitigen Versatz zwischen den zu befüllenden Mulden an den Transport- oder Verpackungsunterlagen, bzw. zwischen den Zellen in Schachteln oder Kartons, wird der notwendige Versatz zwischen den Aufnahmeelementen 2 an den Führungsstangen 3d in ungerader Position und jenen an den Führungsstangen 3p in gerader Position erreicht, wobei die exakte Positionierung der Produktstücke beim Ablegen in die Mulden gesichert ist. Der besagte Versatz zwischen den Aufnahmeelementen 2 an den Führungsstangen 3p und jenen an den Führungsstangen 3d ist, wegen der Anordnung der entsprechenden Querstangenpaare 4a, 4b; 40a, 40b, oberhalb und unterhalb der Führungsstangen 3p, 3d und deren zueinander mechanisch unabhängigen Betätigungsmöglichkeit 4x, 40x in beiden Richtungen und in unterschiedlichen Ausmaßen möglich.

Die Erfindung schließt nicht die Betätigung 2x der Aufnahmeelemente 2 als Gruppe oder längs der einzelnen Führungsstangen 3d, 3p, sowie die Betätigung der Führungsstangen 3d, 3p in Gruppen A, B oder einzeln, z.B. mittels Linearmotoren, Gewindestangen mit Gewindemutter, Kabelzug, Pneumatik- oder Hydraulikzylinder, aus.

Die erfindungsgemäßen Aufnahmeelemente 2 können von der bekannten Art mit Saugnapf 2a sein welcher an eine Saugeinrichtung angeschlossen ist, der besagte Saugnapf, bzw. dessen Schaft, kann mit einem Motor 2m, zwecks dessen Drehung 2r, und mit einer bekannten Kupplung 2k versehen sein welche die Saugwirkung, auch während der Drehung des Saugnapfes 2a, sicherstellt. Die Erfindung schließt nicht den Einsatz anderer Festhalteeinrichtungen aus welche z.B. durch Magnetkraft oder zangenartig wirken, diese sind eventuell motorbetrieben um auf bekannte Art Drehungen und/oder Neigungen in mehrere Richtungen ausführen zu können.

## Patentansprüche

1. Vorrichtung für die Aufnahme, den Transfer und die Ablage von Produkten, versehen mit einem Rahmen (1) welcher gemäß drei Achsen (1x, 1y, 1z) mittels einem System motorisierter Führungen oder einem Roboterarm bewegt wird und mit Aufnahmeelementen (2) zum Festhalten der Produktstücke versehen ist, wobei die Aufnahmeelemente (2) längs mindestens zweier Führungsstangen (3d, 3p) bewegbar (2x) sind welche in einer einzigen Ebene am Rahmen (1) verstellbar (2y) sind, wobei die Bewegungen (2x) der Aufnahmeelemente (2) senkrecht zu den Bewegungen (3y) der Führungsstangen (3d, 3p) erfolgen, wobei die Führungsstangen (3d, 3p) unter sich mittels pantographartig angeordneter Hebel (3j) verkettet sind, **dadurch gekennzeichnet, dass** die Führungsstangen (3d, 3p), so verkettet sind, dass mindestens zwei Gruppen von Führungsstangen (A, B) gebildet werden, wobei jede der Gruppen durch einen, an den Führungsstangen (3d, 3p) selbst oder am Rahmen (1) montierten Motor (3m), durch Linearmotor oder durch pneumatischem oder hydraulischem Zylinder, angetrieben ist, welcher zwischen den Führungsstangen und dem Rahmen (1) wirkt, **dadurch gekennzeichnet, dass**:
- entweder die durch pantographartig angeordnete Hebel (2j) verketteten, längs der entsprechender Führungsstangen (3d, 3p) verschiebbaren, Aufnahmeelemente (2) über Querstangenpaare (4a, 4b; 40a, 40b) angetrieben werden, welche oberhalb oder/und unterhalb der Führungsstangen (3d, 3p), entlang der parallelen Seiten des Rahmens (1), parallel zu den Führungsstangen (3d, 3p), beweglich (4x, 40x) gelagert sind und mit den äußersten Aufnahmeelementen (2) der Reihe von Aufnahmeelementen welche auf der selben Führungsstange gelagert sind, verbunden sind und welche durch einen, an der Querstange (4a, 4b; 40a, 40b) oder am Rahmen (1) montierten, Motor (4m) oder hydraulischem oder pneumatischem Zylinder angetrieben sind welcher zwischen der Querstange und dem Rahmen (1) wirkt,
- oder die einzelnen, auf allen oder auf einem Teil der Führungsstangen (3d, 3p) gelagerten Aufnahmeelemente (2) nicht durch pantographartig angeordneten Hebel verbunden (2j) sind um einzeln durch Motor oder Hydraulik- oder Pneumatikzylinder bewegt (2x) zu werden, welcher zwischen dem besagten Aufnahmeelement (2) und der entsprechenden Führungsstange (3d, 3p) wirkt und am Aufnahmeelement selbst oder an der entsprechenden Führungsstange montiert ist.

2. Vorrichtung gemäß Anspruch 1, **dadurch gekennzeichnet, dass** die Führungsstangen (3d, 3p) nicht verbunden (3j) sind, wobei jede der Führungsstangen (3d, 3p) spezifisch und unabhängig, von einem, an der Führungsstange (3d, 3p) selbst oder am Rahmen (1) montiertem, Motor (3m), einem Linearmotor oder einem pneumatischen oder hydraulischen Zylinder, welcher zwischen der Führungsstange und dem Rahmen (1) wirkt, angetrieben wird.

3. Vorrichtung gemäß Anspruch 1, **dadurch gekennzeichnet, dass** die einzelnen Aufnahmeelemente (2) welche längs der einzelnen Führungsstangen (3d, 3p) bewegbar (2x) gelagert sind unter sich durch pantographartig angeordnete Hebel (2j) verkettet sind und dass die besagten, auf der selben Führungsstange gelagerten, Aufnahmeelemente (2), durch einen, an den besagten Aufnahmeelementen (2) oder an der Führungsstange (3d, 3p) montierten, spezifischen Motor oder durch pneumatischen oder hydraulischen Zylinder angetrieben werden, welcher zwischen den besagten Aufnahmeelementen (2) und der entsprechenden Führungsstange wirkt.

4. Vorrichtung gemäß Anspruch 1, **dadurch gekennzeichnet, dass** die versetzte Anordnung der, auf den benachbarten, gesonderten Führungsstangen (3d, 3p) gelagerten, Aufnahmeelemente (2) welche von der Anordnungsgeometrie der versetzten Mulden an den Transport- oder Verpackungsunterlagen, bzw. von den Schachteln oder Kartons welche die, mittels erfindungsgemäßer Vorrichtung abzulegende Produktstücke aufnehmen, vorgegeben ist, im Fall der Betätigung (2x) der Aufnahmeelemente (2) mittels der beweglichen (4x, 40x) Querstangen (4a, 4b; 40a, 40b) dadurch erreicht wird, dass die Querstangenpaare auf die, auf den Führungsstangen (3d) in ungerader Position gelagerten, Aufnahmeelemente (2), in Bezug auf die, auf den Führungsstangen (3p) in gerader Position gelagerten, Führungsstangen (3p), differenziert wirken.

## Claims

1. A device for picking up, transferring and depositing products, provided with a frame (1) which is moved in three axes (1x, 1y, 1z) by means of a system of motorized guides or a robotic arm and with pick-up elements (2) for holding the product pieces, wherein the pick-up elements (2) are movable (2x) along at least two guide rods (3d, 3p) which are movable (2y) in a single plane on the frame (1), wherein the movements (2x) of the pick-up elements (2) take place perpendicular to the movements (3y) of the guide rods (3d, 3p), wherein the guide rods (3d, 3p) are linked to one another by means of levers (3j) arranged in the manner of a pantograph, wherein the guide rods (3d, 3p) are linked in such a way that at least two groups of guide rods (A, B) are formed, wherein each of the groups is driven by a motor (3m), mounted on the guide rods (3d, 3p) themselves or on the frame (1), by a linear motor or by a pneumatic or hydraulic cylinder which acts between the guide rods and the frame (1), **characterized in that**:
- either the pick-up elements (2), which are linked by levers (2j) arranged in the manner of a pantograph and are displaceable along the corresponding guide rods (3d, 3p), are driven via pairs of transverse rods (4a, 4b; 40a, 40b) which are movably (4x, 40x) mounted above and/or below the guide rods (3d, 3p), along the parallel sides of the frame (1), parallel to the guide rods (3d, 3p), and are connected to the outermost pick-up elements (2) of the row of pick-up elements mounted on the same guide rod, and which are driven by a motor (4m), mounted on the transverse rod (4a, 4b; 40a, 40b) or on the frame (1), or a hydraulic or pneumatic cylinder which acts between the transverse rod and the frame (1),
- or the individual pick-up elements (2) mounted on all or some of the guide rods (3d, 3p) are not connected (2j) by levers arranged in the manner of a pantograph, so as to be moved (2x) individually by a motor or a hydraulic or pneumatic cylinder which acts between said pick-up element (2) and the corresponding guide rod (3d, 3p) and which is mounted on the pick-up element itself or on the corresponding guide rod.

2. The device according to claim 1, **characterized in that** the guide rods (3d, 3p) are not connected (3j), wherein each of the guide rods (3d, 3p) is driven, specifically and independently, by a motor (3m), mounted on the guide rod (3d, 3p) itself or on the frame (1), a linear motor or a pneumatic or hydraulic cylinder which acts between the guide rod and the frame (1).

3. The device according to claim 1, **characterized in that** the individual pick-up elements (2), which are mounted such as to be movable (2x) along the individual guide rods (3d, 3p), are linked to one another by levers (2j) arranged in the manner of a pantograph, and **in that** said pick-up elements (2), mounted on the same guide rod, are driven by a specific motor, mounted on said pick-up elements (2) or on the guide rod (3d, 3p), or by a pneumatic or hydraulic cylinder which acts between said pick-up elements (2) and the corresponding guide rod.

4. The device according to claim 1, **characterized in that**, in the case of actuating (2x) the pick-up elements (2) by means of the movable (4x, 40x) transverse rods (4a, 4b; 40a, 40b), the offset arrangement of the pick-up elements (2) mounted on the adjacent, separate guide rods (3d, 3p), which is predefined by the arrangement geometry of the offset depressions on the transport or packaging supports and/or by the crates or boxes which receive the product pieces to be deposited by means of the device according to the invention, is achieved **in that** the pairs of transverse rods act differently on the pick-up elements (2) mounted in an odd position on the guide rods (3d) compared to the guide rods (3p) mounted in an even position on the guide rods (3p).

## Revendications

1. Dispositif de saisie, de transfert et de dépôt de produits, muni d'un châssis (1) qui est déplacé le long de trois axes (1x, 1y, 1z) au moyen d'un système de guides motorisés ou d'un bras de robot et qui est muni d'éléments de réception (2) pour retenir les pièces de produit, dans lequel les éléments de réception (2) sont mobiles (2x) le long d'au moins deux tiges de guidage (3d, 3p) qui sont déplaçables (2y) dans un seul plan sur le châssis (1), dans lequel les mouvements (2x) des éléments de réception (2) sont perpendiculaires aux mouvements (3y) des tiges de guidage (3d, 3p), les tiges de guidage (3d, 3p) étant reliées entre elles au moyen de leviers (3j) disposés à la manière d'un pantographe, **caractérisé en ce que** les tiges de guidage (3d, 3p) sont reliées entre elles de manière à former au moins deux groupes de tiges de guidage (A, B), chacun de ces groupes étant entraîné par un moteur (3m) par un moteur linéaire ou par un cylindre pneumatique ou hydraulique monté sur les tiges de guidage (3d, 3p) elles-mêmes ou sur le châssis (1) et agissant entre les tiges de guidage et le châssis (1),
**caractérisé en ce que** :
- soit les éléments de réception (2), qui sont reliés par des leviers (2j) disposés à la manière d'un pantographe, sont déplaçés le long des tiges de guidage correspondantes (3d, 3p) par l'intermédiaire de paires de tiges transversales (4a, 4b; 40a, 40b), qui sont montés de manière déplaçable (4x, 40x) au-dessus et/ ou au-dessous des barres de guidage (3d, 3p) le long des côtés parallèles du cadre (1) parallèlement aux tiges de guidage (3d, 3p) et qui sont reliés aux éléments de réception les plus extérieurs (2) de la rangée d'éléments de réception montés sur la même tige de guidage et qui sont entrainés par un moteur (4m) ou un cylindre hydraulique ou pneumatique monté sur la tige transversale (4a, 4b) agissant entre la traverse et le châssis (1);
- ou les éléments de réception individuels (2) supportés sur toutes ou partie des tiges de guidage (3d, 3p) ne sont pas reliées (2j) par des leviers disposés à la manière d'un pantographe afin d'être déplacés (2x) individuellement par un moteur ou des cylindres hydrauliques ou pneumatiques agissant entre ledit élément de réception (2) et la tige de guidage correspondante (3d, 3p) et montés sur l'élément de réception lui-même ou sur la tige de guidage correspondante.

2. Dispositif selon la revendication 1, **caractérisé en ce que** les tiges de guidage (3d, 3p) ne sont pas reliées (3j), chacune des tiges de guidage (3d, 3p) étant entraînée de manière spécifique et indépendante par un moteur (3m), un moteur linéaire ou un vérin pneumatique ou hydraulique agissant entre la tige de guidage et le châssis (1), monté sur la tige de guidage (3d, 3p) elle-même ou sur le châssis (1).

3. Dispositif selon la revendication 1, **caractérisé en ce que** les différents éléments de réception (2), qui sont supportés (2x) de façon mobile le long des tiges de guidage individuelles (3d, 3p), sont reliés entre eux par des leviers (2j) du type pantographe et **en ce que** lesdits éléments de réception (2) supportés sur la même tige de guidage sont entraînés par un moteur spécifique monté sur lesdits éléments de réception (2) ou sur la tige de guidage (3d, 3p) ou par un vérin pneumatique ou hydraulique agissant entre lesdits éléments de réception (2) et la tige de guidage correspondante.

4. Dispositif selon la revendication 1, **caractérisé en ce que** la disposition décalée des éléments de réception (2) montés sur les tiges de guidage (3d, 3p) adjacentes et distinctes, qui est définie par la géométrie de disposition des auges décalées sur les supports de transport ou d'emballage, respectivement par les boîtes ou cartons qui reçoivent les pièces de produit à déposer au moyen d'un dispositif conforme à l'invention, est réalisée, dans le cas d'un actionnement (2x) des éléments de réception (2) au moyen des tiges transversales (4a, 4b ; 40a, 40b) mobiles (4x, 40x), **en ce que** les paires de tiges transversales agissent sur les éléments de réception (2) montés sur les tiges de guidage (3d) dans une position impaire de manière différenciée par rapport aux tiges de guidage (3p) montées sur les tiges de guidage (3p) dans une position paire.
